# EUROPÄISCHE PATENTSCHRIFT

(11) **EP 3 380 271 B1**
(45) Veröffentlichungstag und Bekanntmachung des Hinweises auf die Patenterteilung: **29.05.2024**
(21) Anmeldenummer: 16795337.1
(22) Anmeldetag: 15.11.2016
(51) Int. Cl.: B24B 55/05, B24B 23/02, B23Q 11/06, B24B 27/08

(54) **TRAGBARE, HANDGEFÜHRTE TRENNSCHLEIFMASCHINE**
PORTABLE, HAND HELD CUTTING-OFF MACHINE
TRONÇONNEUSE PORTATIVE MANUELLE

(30) Priorität: 25.11.2015 EP 15196162
(43) Veröffentlichungstag der Anmeldung: 03.10.2018
(73) Patentinhaber: Hilti Aktiengesellschaft, 9494 Schaan (LI)
(72) Erfinder: GREITMANN, Ralf, 86916 Kaufering (DE); VEIK, Guenther, 6841 Mäder (AT); SPECHT, Helmut, 86825 Bad Wörishofen (DE)
(74) Vertreter: Hilti Aktiengesellschaft Corporate Intellectual Property
(86) Internationale Anmeldenummer: PCT/EP2016/077667
(87) Internationale Veröffentlichungsnummer: WO 2017/089169

(56) Entgegenhaltungen:
- EP-A1- 1 053 829
- EP-A1- 1 609 572
- DE-B3-102004 035 876
- DE-B4-102005 049 766
- US-A1- 2003 075 028
- US-A1- 2004 159 315

## Beschreibung

### Technisches Gebiet

Die vorliegende Erfindung betrifft eine tragbare, handgeführte Trennschleifmaschine gemäß dem Oberbegriff des Anspruchs 1.

### Stand der Technik

Trennschleifmaschinen sind tragbare, handgeführte Werkzeuggeräte mit einem Bearbeitungswerkzeug, das in Form einer rotierenden Trennschleifscheibe ausgebildet ist. Die wesentlichen Komponenten einer Trennschleifmaschine umfassen neben der Trennschleif-scheibe ein tragendes Gehäuseteil, eine Abtriebswelle, die um eine Abtriebsachse drehbar gelagert ist, einen Antriebsmotor, eine Übertragungseinrichtung, die den Antriebsmotor mit der Abtriebswelle verbindet, einen Flansch und eine Schutzhaube, die die Trennschleif-scheibe über einen Abdeckbereich abdeckt. Die Trennschleifscheibe ist mittels des Flansches drehfest auf der Abtriebswelle montiert und von der Schutzhaube umgeben, die um eine Schwenkachse schwenkbar gelagert ist. Dabei ist die Schwenkachse der Schutzhaube koaxial zur Abtriebsachse, die der Drehachse der Trennschleifscheibe entspricht, angeordnet. DE 10 2005 049 766 B4 offenbart eine solche tragbare, handgeführte Trennschleifmaschine.

Die Europäische Norm EN ISO 19432:2012 und die US-Norm ANSI B175.4-2013 legen Sicherheitsanforderungen und Maßnahmen für die Prüfung des konstruktiven Aufbaus von tragbaren, handgeführten Trennschleifmaschinen mit eingebautem Verbrennungsmotor für den Einmannbetrieb fest, die zum Schneiden von Baumaterialien, wie zum Beispiel Asphalt, Beton, Stein und Metall, bestimmt sind, und gelten für Trennschleifmaschinen, die für den Einsatz mit einer rotierenden Trennschleifscheibe mit Trennschleifkörpern aus gebundenen Schleifmitteln und/oder Schleifwerkzeugen mit Diamant- und CBN-Schleifmitteln vorgesehen sind, die mittig auf einer Spindelwelle montiert sind und von dieser angetrieben werden, wobei sich die Stirnseite der Trennschleifscheibe in einer vom Anwender abgewandten Richtung dreht. Die Normen definieren in Abhängigkeit vom Typ und vom Scheibendurchmesser einer Trennschleifscheibe einen Mindestflanschdurchmesser für den Flansch. Beim Typ der Trennschleifscheiben wird zwischen Diamant-Trennschleifscheiben und abrasiven Trennschleifscheiben unterschieden und beim Scheibendurchmesser D der Trennschleifscheiben werden vier Bereiche (D ≤ 250 mm, 250 mm < D ≤ 300 mm, 300 mm < D ≤ 350 mm und 350 mm < D) unterschieden. Die Europäische Norm EN ISO 19432:2012 gilt für Trennschleifscheiben mit einem maximalen Scheibendurchmesser von 400 mm und die US-Norm ANSI B175.4-2013 gilt für Trennschleifscheiben mit einem maximalen Scheibendurchmesser von 406 mm.

Die Europäische Norm EN IEC 60745-2-22:2011 und die US-Norm ANSI/UL 60745-2-22-2012 gelten für handgeführte, motorbetriebene Elektrowerkzeuge in Form von Trennschleifmaschinen, die zum Trennschneiden von Werkstoffen wie Metall, Beton, Mauerwerk, Glas und Fliesen mit einer rotierenden Trennschleifscheibe mit Scheibendurchmessern von 55 mm bis 410 mm vorgesehen sind. Die Normen definieren in Abhängigkeit vom Typ, vom Scheibendurchmesser D und vom Bohrungsdurchmesser Ø einer Trennschleifscheibe einen Mindestflanschdurchmesser für den Flansch. Beim Typ der Trennschleifscheiben wird zwischen Diamant-Trennschleifscheiben und gebundenen verstärkten Trennschleifscheiben des Typs 41 oder 42 unterschieden. Der Mindestflanschdurchmesser dₘᵢₙ beträgt dₘᵢₙ = 0.15 * D für Diamant-Trennschleifscheiben mit einem Scheibendurchmesser D von 55 mm ≤ D ≤ 410 mm. Für gebundene verstärkte Trennschleifscheiben des Typs 41 oder 42 werden beim Scheibendurchmesser D vier Bereiche (55 mm ≤ D < 80 mm, 80 mm ≤ D < 105 mm, 105 mm ≤ D ≤ 230 mm und 230 mm < D ≤ 410 mm) unterschieden und für Scheibendurchmesser D mit 80 mm ≤ D < 105 mm werden Bohrungsdurchmesser Ø von 10 mm und 16 mm unterschieden.

Die maximale Schnitttiefe, die eine Trennschleifscheibe in einem Werkstück erzielen kann, ist durch die halbe Differenz aus dem Scheibendurchmesser der Trennschleifscheibe und dem zugeordneten Mindestflanschdurchmesser des Flansches festgelegt. In der Praxis werden bei Trennschleifmaschinen mit einem Verbrennungsmotor vor allem Diamant-Trennschleifscheiben mit Scheibendurchmessern von 300 mm und 350 mm eingesetzt. Die maximale Schnitttiefe, die eine Diamant-Trennschleifscheibe mit einem Scheibendurchmesser von 300 mm erzielen kann, beträgt 127.5 mm und die maximale Schnitttiefe, die eine Diamant-Trennschleifscheibe mit einem Scheibendurchmesser von 350 mm erzielen kann, beträgt 148.75 mm.

Die tatsächlichen Schnitttiefen, die bekannte Trennschleifmaschinen in einem Werkstück erzielen, sind kleiner als die genannten maximalen Schnitttiefen, die durch die halbe Differenz aus dem Scheibendurchmesser und dem Mindestflanschdurchmesser festgelegt sind. Der Gerätehersteller Stihl bietet verschiedene Trennschleifmaschinen mit Verbrennungsmotor an, unter anderem die Trennschleifmaschinen TS 400, TS 410 und TS 420. Die TS 400-Trennschleifmaschinen sind für Diamant-Trennschleifscheiben vorgesehen und können mit unterschiedlichen Scheibendurchmessern von 300 mm und 350 mm betrieben werden. Die Schnitttiefe, die die TS 400-Trennschleifmaschine mit einem Scheibendurchmesser von 300 mm erreicht, beträgt laut Herstellerangaben 100 mm und die maximale Schnitttiefe, die die TS 400-Trennschleifmaschine mit einem Scheibendurchmesser von 350 mm erreicht, beträgt laut Herstellerangaben 125 mm. Die TS 410-Trennschleifmaschinen sind für Diamant-Trennschleifscheiben mit einem Scheibendurchmesser von 300 mm und die TS 420-Trennschleifmaschinen für Diamant-Trennschleifscheiben mit einem Scheibendurchmesser von 350 mm vorgesehen. Die maximale Schnitttiefe, die die TS 410-Trennschleifmaschine erreicht, beträgt laut Herstellerangaben 100 mm und die maximale Schnitttiefe, die die TS 420-Trennschleifmaschine erreicht, beträgt laut Herstellerangaben 125 mm.

Die Schnitttiefen, die die TS 400-Trennschleifmaschine mit einem Scheibendurchmesser von 300 mm und die TS 410-Trennschleifmaschine erzielen, sind 20 % geringer als die maximale Schnitttiefe von 127.5 mm und die Schnitttiefen, die die TS 400-Trennschleifmaschine mit einem Scheibendurchmesser von 350 mm und die TS 420-Trennschleifmaschine erzielen, sind ca. 16 % geringer als die maximale Schnitttiefe von 148.75 mm. Die Flansche, die Stihl bei den Trennschleifern TS 400, TS 410 und TS 420 einsetzt, weisen einen Flanschdurchmesser von mindestens 103 mm auf. Bei den TS 400-Trennschleifmaschinen, die mit unterschiedlichen Scheibendurchmessern von 300 mm und 350 mm betrieben werden können, ist für die unterschiedlichen Scheibendurchmesser der gleiche Flanschdurchmesser von mindestens 103 mm vorgesehen. Die eingesetzten Flanschdurchmesser sind sehr viel grösser als die Mindestflanschdurchmesser dₘᵢₙ, die die Europäische Norm EN ISO 19432:2012 und die US-Norm ANSI B175.4-2013 für Diamant-Trennschleifscheiben mit einem Scheibendurchmesser von 300 mm (dₘᵢₙ ≥ 45 mm) und einem Scheibendurchmesser von 350 mm (dₘᵢₙ ≥ 52.5 mm) fordern. Die Normen gelten für Trennschleifmaschinen, die am oder nach dem Veröffentlichungstag der Normen hergestellt wurden und nicht für Trennschleifmaschinen, die vor dem Veröffentlichungstag der Normen hergestellt wurden. Auch die vorherigen Versionen der Normen haben für Diamant-Trennschleifscheiben mit Scheibendurchmesser von 300 mm und 350 mm die gleichen Mindestflanschdurchmesser von 45 mm und 52.5 mm festgelegt.

EP 1 609 572 A1 offenbart eine weitere bekannte tragbare, handgeführte Trennschleifmaschine, die eine Trennschleifscheibe, ein tragendes Gehäuseteil, eine Abtriebswelle, einen Antriebsmotor, eine Übertragungseinrichtung, einen Flansch und eine Schutzhaube umfasst. Allerdings ist die Schutzhaube nicht schwenkbar ausgebildet. Die Schutzhaube wird an ihrer Unterseite auf ein zu bearbeitendes Werkstück aufgesetzt und die Trennschleifscheibe und Abtriebswelle werden während der Bearbeitung gegenüber der Schutzhaube abgesenkt.

### Darstellung der Erfindung

Die Aufgabe der vorliegenden Erfindung besteht darin, eine tragbare, handgeführte Trennschleifmaschine dahingehend weiterzuentwickeln, dass die Schnitttiefe, die mit einer Trennschleifscheibe in einem Werkstück erreichbar ist, gegenüber den bekannten Trennschleifmaschinen vergrößert wird und möglichst die maximale Schnitttiefe, die durch die halbe Differenz aus dem Scheibendurchmesser der Trennschleifscheibe und dem Mindestflanschdurchmesser des Flansches festgelegt ist, erreicht wird.

Diese Aufgabe wird bei der eingangs genannten tragbaren, handgeführten Trennschleifmaschine erfindungsgemäß durch die Merkmale des unabhängigen Anspruchs 1 gelöst. Vorteilhafte Weiterbildungen sind in den abhängigen Ansprüchen angegeben.

Erfindungsgemäß ist die tragbare, handgeführte Trennschleifmaschine dadurch gekennzeichnet, dass der Flanschdurchmesser des Flansches einem Mindestflanschdurchmesser entspricht und die Schutzhaube über einen ersten Winkelbereich, das tragende Gehäuseteil über einen zweiten Winkelbereich und die Übertragungseinrichtung über einen dritten Winkelbereich Maximalabstände zur Abtriebsachse aufweisen, die kleiner oder gleich dem halben Mindestflanschdurchmesser sind. Als Mindestflanschdurchmesser sind die Flanschdurchmesser definiert, die in den jeweils geltenden Normen als untere Grenzwerte für den Flansch festgelegt sind. Der Mindestflanschdurchmesser ist unter anderem abhängig vom Typ des Antriebsmotors, vom Typ der Trennschleifscheibe und vom Scheibendurchmesser der Trennschleifscheibe.

Bei der erfindungsgemäßen Trennschleifmaschine weist die Schutzhaube eine erste Außenkontur mit einem ersten Maximalabstand zur Abtriebsachse auf und als erster Winkelbereich ist der Winkelbereich definiert, in dem die erste Außenkontur der Schutzhaube Abstände zur Abtriebsachse aufweist, die kleiner oder gleich dem halben Mindestflanschdurchmesser sind. Das tragende Gehäuseteil weist eine zweite Außenkontur mit einem zweiten Maximalabstand auf und als zweiter Winkelbereich ist der Winkelbereich definiert, in dem die zweite Außenkontur des tragenden Gehäuseteils Abstände zur Abtriebsachse aufweist, die kleiner oder gleich dem halben Mindestflanschdurchmesser sind. Die Übertragungseinrichtung weist eine dritte Außenkontur mit einem dritten Maximalabstand zur Abtriebsachse auf und als dritter Winkelbereich ist der Winkelbereich definiert, in dem die dritte Außenkontur der Übertragungseinrichtung Abstände zur Abtriebsachse aufweist, die kleiner oder gleich dem halben Mindestflanschdurchmesser sind. Die Gestaltung der ersten, zweiten und dritten Außenkontur ermöglicht, dass mit der erfindungsgemäßen Trennschleifmaschine die maximale Schnitttiefe, die als halbe Differenz aus dem Scheibendurchmesser der Trennschleifscheibe und dem Mindestflanschdurchmesser definiert ist, erzielt werden kann. Die maximale Schnitttiefe ist unter anderem abhängig vom Typ des Antriebsmotors, vom Typ der Trennschleifscheibe und vom Scheibendurchmesser der Trennschleifscheibe. Die maximale Schnitttiefe wird in einem Arbeitswinkel der Trennschleifmaschine erzielt, in dem die erste, zweite und dritte Außenkontur Maximalabstände zur Abtriebsachse aufweisen, die kleiner oder gleich dem halben Mindestflanschdurchmesser sind. Nur wenn die Schnittmenge aus dem ersten, zweiten und dritten Winkelbereich von Null verschieden ist, kann die maximale Schnitttiefe erzielt werden.

In einer bevorzugten Ausführungsform ist die Schutzhaube zwischen einer vorderen und einer hinteren Schwenkposition verstellbar, wobei ein Outcut-Winkel, der als Schnittmenge aus dem ersten, zweiten und dritten Winkelbereich gebildet ist, für mindestens eine Schwenkposition der Schutzhaube von Null verschieden ist. Die Schutzhaube ist um die Schwenkachse schwenkbar und zwischen einer vorderen Schwenkposition und einer hinteren Schwenkposition verstellbar, wobei die Schutzhaube in diskreten Schwenkpositionen oder in jeder beliebigen Schwenkposition zwischen der vorderen und der hinteren Schwenkposition angeordnet sein kann. Die erste Außenkontur der Schutzhaube ist um die Schwenkachse verstellbar ausgebildet; die zweite Außenkontur des tragenden Gehäuseteils und die dritte Außenkontur der Übertragungseinrichtung sind nicht verstellbar ausgebildet. Wenn die Schutzhaube um die Schwenkachse bewegt wird, verändert sich die Lage des ersten Winkelbereichs relativ zum zweiten und dritten Winkelbereich. Im Outcut-Winkel gilt, dass die drei Komponenten der erfindungsgemäßen Trennschleifmaschine, die als Schutzhaube, tragendes Gehäuseteil und Übertragungseinrichtung ausgebildet sind, Abstände zur Abtriebsachse aufweisen, die kleiner oder gleich dem halben Mindestflanschdurchmesser sind. Wenn der Arbeitswinkel der erfindungsgemäßen Trennschleifmaschine innerhalb des Outcut-Winkels liegt, kann die maximale Schnitttiefe, die als halbe Differenz aus dem Scheibendurchmesser der Trennschleifscheibe und dem Mindestflanschdurchmesser definiert ist, erzielt werden.

Besonders bevorzugt ist der Outcut-Winkel für alle Schwenkpositionen der Schutzhaube zwischen der vorderen und hinteren Schwenkposition von Null verschieden. Im Outcut-Winkel gilt, dass die drei Komponenten, die als Schutzhaube, tragendes Gehäuseteil und Übertragungseinrichtung ausgebildet sind, Abstände zur Abtriebsachse aufweisen, die kleiner oder gleich dem halben Mindestflanschdurchmesser sind. Wenn der Outcut-Winkel bei der erfindungsgemäßen Trennschleifmaschine für alle Schwenkpositionen der Schutzhaube von Null verschieden ist, kann in jeder Schwenkposition der Schutzhaube die maximale Schnitttiefe erzielt werden. Die Trennschleifmaschine muss vom Bediener so ausgerichtet werden, dass der Arbeitswinkel innerhalb des Outcut-Winkels liegt.

Besonders bevorzugt ist die Schwenkachse der Schutzhaube gegenüber der Abtriebsachse der Abtriebswelle um einen Abstand Δ in den Abdeckbereich der Schutzhaube verschoben.

Die Schutzhaube besteht aus dem Abdeckbereich, der die Trennschleifscheibe abdeckt, und dem Bearbeitungsbereich, der die Trennschleifscheibe für die Bearbeitung eines Werkstückes freigibt. Um mit einer Trennschleifscheibe eine möglichst große Schnitttiefe zu erzielen, wird ein Flansch mit einem möglichst kleinen Flanschdurchmesser eingesetzt. Bei der erfindungsgemäßen Trennschleifmaschine wird ein Flansch mit dem Mindestflanschdurchmesser eingesetzt; der Mindestflanschdurchmesser entspricht dem kleinsten Flanschdurchmesser, der nach den Normen möglich ist. Je kleiner der Flanschdurchmesser ausgewählt wird, umso kleiner ist der Aufnahmebereich für die Anordnung und Lagerung der Komponenten (Lager für die Abtriebswelle, Schutzhaube, tragendes Gehäuseteil und Übertragungseinrichtung), wobei die Lagerung der Schutzhaube besonders kritisch ist. Die Schutzhaube weist einen Befestigungsflansch auf, der auf eine passende Gegenkontur des tragenden Gehäuseteils aufgesteckt wird und zur Gegenkontur um die Schwenkachse verstellbar ist. Fällt die Schwenkachse der Schutzhaube mit der Abtriebsachse der Abtriebswelle zusammen, ist der Durchmesser des Befestigungsflansches durch den Mindestflanschdurchmesser begrenzt. Der Durchmesser des Befestigungsflansches ist eine Größe, die bei schwenkbaren Schutzhauben, die über Reibschluss verstellbar sind, im Wesentlichen durch die Größe und das Gewicht der Schutzhaube festgelegt ist. Durch die Verschiebung der Schwenkachse in den Abdeckbereich der Schutzhaube kann der Durchmesser des Befestigungsflansches grösser als der Flanschdurchmesser des eingesetzten Flansches ausgewählt werden. Die Verschiebung der Schwenkachse gegenüber der Abtriebsachse ist besonders vorteilhaft, wenn der Durchmesser des Befestigungsflansches optimal an die Größe und das Gewicht der Schutzhaube angepasst werden soll.

Besonders bevorzugt ist die Größe des ersten Winkelbereiches von der Schwenkposition der Schutzhaube abhängig. Die Schutzhaube ist um die Schwenkachse verstellbar und die Lage des ersten Winkelbereichs verändert sich beim Schwenken relativ zum zweiten Winkelbereich des tragenden Gehäuseteils und zum dritten Winkelbereich der Übertragungseinrichtung. Wenn die Schwenkachse gegenüber der Abtriebsachse verschoben ist, kann sich die Größe des ersten Winkelbereiches beim Schwenken verändern.

In einer bevorzugten Ausführung der erfindungsgemäßen Trennschleifmaschine weist die Übertragungseinrichtung eine Abtriebsscheibe, die auf der Abtriebswelle angeordnet ist, und ein Übertragungselement, das eine Bewegung des Antriebsmotors auf die Abtriebsscheibe überträgt, auf, wobei die Abtriebsscheibe und das Übertragungselement über den dritten Winkelbereich Maximalabstände zur Abtriebsachse aufweisen, die kleiner oder gleich dem halben Mindestflanschdurchmesser sind. Die Übertragungseinrichtung zählt zu den Komponenten der Trennschleifmaschine, die im Aufnahmebereich angeordnet sind. Die Bedingung, dass der Maximalabstand der Übertragungseinrichtung zur Abtriebsachse im dritten Winkelbereich kleiner oder gleich dem halben Mindestflanschdurchmesser ist, muss für sämtliche Teilkomponenten der Übertragungseinrichtung erfüllt sein. Dazu gehören die Abtriebsscheibe, die auf der Abtriebswelle angeordnet ist, und das Übertragungselement, das auf der Abtriebsscheibe angeordnet ist. Die Abtriebsscheibe weist einen vierten Maximalabstand zur Abtriebsachse auf und das Übertragungselement weist einen fünften Maximalabstand zur Abtriebsachse auf.

Besonders bevorzugt weist die Übertragungseinrichtung eine Abdeckung auf, die die Abtriebsscheibe und das Übertragungselement abdeckt, wobei die Abdeckung über den dritten Winkelbereich einen Maximalabstand zur Abtriebsachse aufweist, der kleiner oder gleich dem halben Mindestflanschdurchmesser ist. Bei den Teilkomponenten der Übertragungseinrichtung, die als Abtriebsscheibe und Übertragungselement ausgebildet sind, handelt es sich um rotierende Bauteile, die aus Sicherheitsanforderungen abgedeckt werden müssen. Die Abdeckung weist einen sechsten Maximalabstand zur Abtriebsachse auf.

In einer ersten Variante der erfindungsgemäßen Trennschleifmaschine ist der Antriebsmotor als Verbrennungsmotor ausgebildet und die Trennschleifscheibe ist als Diamant-Trennschleifscheibe oder als abrasive Trennschleifscheibe ausgebildet. Für Trennschleifmaschinen mit Verbrennungsmotor gilt in Europa die Europäische Norm EN ISO 19432:2012 und in USA die US-Norm ANSI B175.4-2013. In anderen Ländern oder Regionen außerhalb von Europa und USA gelten vergleichbare Normen und in europäischen Ländern kann die Europäische Norm in nationale Normen umgesetzt sein. Der Mindestflanschdurchmesser dₘᵢₙ beträgt für erfindungsgemäße Trennschleifmaschinen mit einem Verbrennungsmotor und einer Diamant-Trennschleif-scheibe: dₘᵢₙ = 37.5 mm für D ≤ 250 mm, dₘᵢₙ = 45 mm für 250 mm < D ≤ 300 mm, dₘᵢₙ = 52.5 mm für 300 mm < D ≤ 350 mm und dₘᵢₙ = 60 mm für 350 mm < D. Der Mindestflanschdurchmesser dₘᵢₙ beträgt für Trennschleifmaschinen mit einem Verbrennungsmotor und einer abrasiven Trennschleifscheibe: dₘᵢₙ = 63.5 mm für D ≤ 250 mm, dₘᵢₙ = 75 mm für 250 mm < D ≤ 300 mm, dₘᵢₙ = 87.5 mm für 250 mm < D ≤ 350 mm und dₘᵢₙ = 100 mm für 350 mm < D.

Eine erfindungsgemäße Trennschleifmaschine mit Verbrennungsmotor und einer Diamant-Trennschleifscheibe erzielt bei einem Scheibendurchmesser von 250 mm eine maximale Schnitttiefe von 106.25 mm (½ * (250 mm - 37.5 mm)), bei einem Scheibendurchmesser von 300 mm eine maximale Schnitttiefe von 127.5 mm (½* (300 mm - 45 mm)), bei einem Scheibendurchmesser von 350 mm eine maximale Schnitttiefe von 148.75 mm (½* (350 mm - 52.5 mm)) und bei einem Scheibendurchmesser von 400 mm eine maximale Schnitttiefe von 170 mm (½* (400 mm - 60 mm)). Eine erfindungsgemäße Trennschleifmaschine mit Verbrennungsmotor und einer abrasiven Trennschleifscheibe erzielt bei einem Scheibendurchmesser von 250 mm eine maximale Schnitttiefe von 93.25 mm (½* (250 mm - 63.5 mm)), bei einem Scheibendurchmesser von 300 mm eine maximale Schnitttiefe von 112.5 mm (½* (300 mm - 75 mm)), bei einem Scheibendurchmesser von 350 mm eine maximale Schnitttiefe von 131.25 mm (½* (350 mm - 87.5 mm)) und bei einem Scheibendurchmesser von 400 mm eine maximale Schnitttiefe von 150 mm (½* (400 mm - 100 mm)).

In einer zweiten Variante der erfindungsgemäßen Trennschleifmaschine ist der Antriebsmotor als Elektromotor ausgebildet und die Trennschleifscheibe ist als Diamant-Trennschleif-scheibe oder als gebundene verstärkte Trennschleifscheibe des Typs 41 oder 42 ausgebildet. Für Trennschleifmaschinen mit Elektromotor gilt in Europa die Europäische Norm EN IEC 60745-2-22:2011 und in USA die US-Norm ANSI/UL 60745-2-22-2012. In anderen Ländern oder Regionen außerhalb von Europa und USA gelten vergleichbare Normen und in europäischen Ländern kann die Europäische Norm in nationale Normen umgesetzt sein. Der Mindestflanschdurchmesser dₘᵢₙ beträgt für erfindungsgemäße Trennschleifmaschinen mit einem Elektromotor und einer Diamant-Trennschleifscheibe: dₘᵢₙ = 0.15 * D für 55 mm ≤ D ≤ 410 mm. Der Mindestflanschdurchmesser dₘᵢₙ beträgt für erfindungsgemäße Trennschleifmaschinen mit einem Elektromotor und einer gebundenen verstärkten Trennschleifscheibe des Typs 41 oder 42: dₘᵢₙ = 19 mm für 55 mm ≤ D < 80 mm, dₘᵢₙ = 19 mm bei Ø = 10 mm und dₘᵢₙ = 28 mm bei QJ=16 mm für 80 mm ≤ D < 105 mm, dₘᵢₙ = 40 mm für 105 mm ≤ D ≤ 230 mm und dₘᵢₙ = 0.25 * D für 230 mm < D ≤ 410 mm.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A,: B eine erfindungsgemäße tragbare, handgeführte Trennschleifmaschine mit einer Trennschleifscheibe;
- FIGN. 2A,: B eine Schutzhaube und einen Riemenantrieb der in FIGN. 1A, B gezeigten Trennschleifmaschine mit einer Abdeckung (FIG. 2A) und ohne Abdeckung (FIG. 2B);
- FIGN. 3A, B: die Schutzhaube der Trennschleifmaschine in einer vorderen Schwenkposition (FIG. 3A) und einer hinteren Schwenkposition (FIG. 3B);
- FIGN. 4A, B: das tragende Gehäuseteil (FIG. 4A) und die Übertragungseinrichtung (FIG. 4B) der Trennschleifmaschine; und
- FIGN. 5A, B: die Trennschleifmaschine in der vorderen Schwenkposition der Schutzhaube (FIG. 5A) und der hinteren Schwenkposition der Schutzhaube (FIG. 5B).

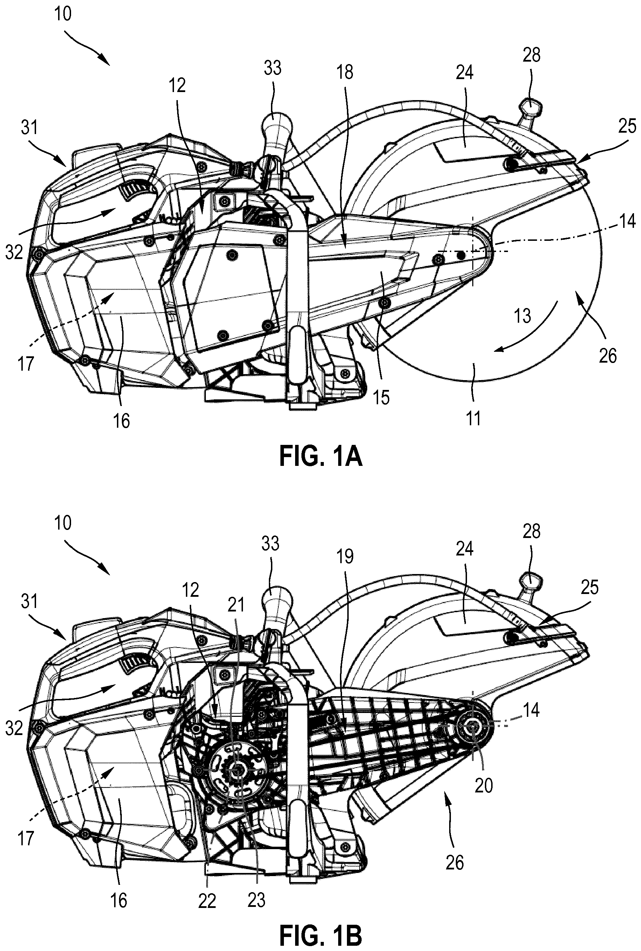

**FIGN. 1A****, B** zeigen ein erfindungsgemäßes tragbares, handgeführtes Werkzeuggerät **10,** das in Form einer Trennschleifmaschine ausgebildet ist. Die Trennschleifmaschine 10 weist ein als Trennschleifscheibe **11** ausgebildetes Bearbeitungswerkzeug auf, das von einer Antriebseinrichtung **12** in einer Drehrichtung **13** um eine Drehachse **14** angetrieben wird. Dabei werden als Antriebseinrichtung 12 sämtliche Antriebskomponenten für die Trennschleif-scheibe 11 zusammengefasst. Bei der in FIG. 1B dargestellten Trennschleifmaschine 10 wurde eine Abdeckung **15** entfernt, so dass zumindest einige Antriebskomponenten der Antriebseinrichtung 12 sichtbar sind. Die Abdeckung 15 kann einteilig oder mehrteilig ausgebildet sein und wird über Schrauben an der Trennschleifmaschine 10 befestigt.

Die Antriebseinrichtung 12 umfasst einen in einem Motorgehäuse **16** angeordneten Antriebsmotor **17,** eine in einem Tragarm **18** angeordnete Übertragungseinrichtung, die als Riemenantrieb **19** ausgebildet ist, und eine Abtriebswelle **20,** auf der die Trennschleifscheibe 11 montiert ist. Bei Bedarf können weitere Getriebekomponenten zwischen dem Antriebsmotor 17 und dem Riemenantrieb 19 geschaltet sein. Zwischen dem Antriebsmotor 17 und dem Riemenantrieb 19 kann eine Fliehkraftkupplung angeordnet sein, die dafür sorgt, dass sich die Trennschleifscheibe 11 bei geringen Drehzahlen, wie im Leerlauf oder beim Starten des Trennschleifers 10, nicht dreht. Die Fliehkraftkupplung weist eine Kupplungsglocke auf, gegen die Fliehgewichte im Betrieb aufgrund der Fliehkraft nach außen gedrückt werden. Der Antriebsmotor 17 treibt eine Antriebswelle **21** um eine Antriebsachse **22** an. Die Kupplungsglocke der Fliehkraftkupplung ist drehfest mit einer auf der Antriebswelle 21 drehbar gelagerten Antriebsscheibe **23** verbunden.

Als Antriebsmotoren 17 für die Trennschleifmaschine 10 werden Verbrennungsmotoren oder Elektromotoren eingesetzt. Unter dem Begriff "Elektromotor" werden sämtliche Antriebsmotoren für motorbetriebene Elektrowerkzeuge zusammengefasst, wobei die Elektrowerkzeuge leitungsgebunden mit einer direkten Verbindung zum Stromnetz oder leitungsungebunden ohne direkte Verbindung zum Stromnetz ausgebildet sein können. Trennschleifmaschinen mit einem Verbrennungsmotor können mit verschiedenen Typen von Trennschleifscheiben 11 verwendet werden, Diamant-Trennschleifscheiben und abrasive Trennschleifscheiben, wobei die Trennschleifscheiben Trennschleifkörper aus gebundenen Schleifmitteln und/oder Schleifwerkzeugen mit Diamant- und CBN-Schleifmitteln umfassen. Trennschleifmaschinen mit einem Elektromotor können mit verschiedenen Typen von Trennschleifscheiben 11 verwendet werden, Diamant-Trennschleifscheiben und gebundene verstärkte Trennschleifscheiben des Typs 41 oder 42.

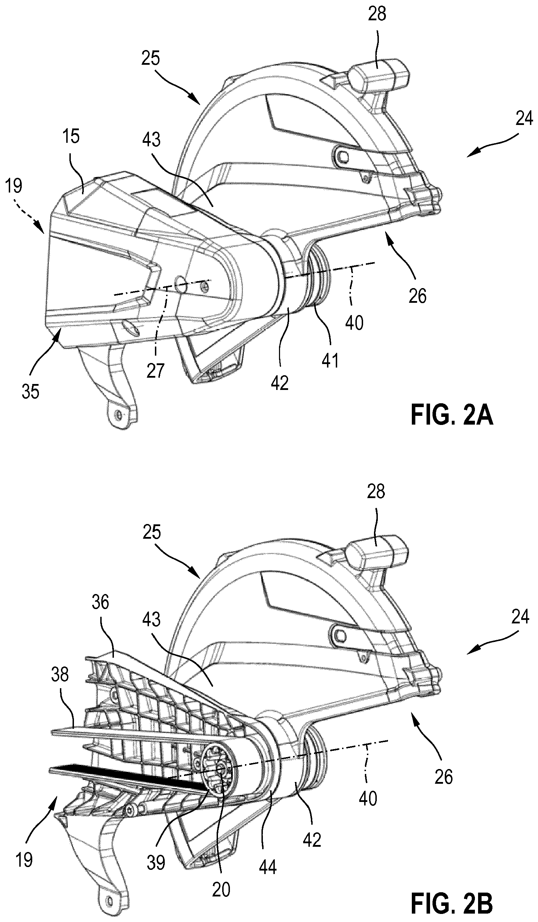

Die Trennschleifscheibe 11 ist von einer Schutzhaube **24** umgeben, die zum Schutz des Bedieners vor umherfliegenden Staubpartikeln dient und außerdem die Verletzungsgefahr reduziert, dass der Bediener im Betrieb der Trennschleifmaschine 10 in die rotierende Trennschleifscheibe 11 greift. Die Schutzhaube 24 ist in einem Nabenbereich der Trennschleif-scheibe 11 befestigt und besteht aus einem Abdeckbereich **25,** der die Trennschleifscheibe 11 über einen Abdeckwinkel von ca. 200 ° abdeckt, und einem Bearbeitungsbereich **26,** der die Trennschleifscheibe 11 über einen Bearbeitungswinkel von ca. 160 ° für die Bearbeitung eines Werkstückes freigibt. Die Schutzhaube 24 ist schwenkbar ausgebildet und kann um eine Schwenkachse **27** (FIGN. 2A, B) in eine gewünschte Schwenkposition geschwenkt werden. Zur Einstellung der Schwenkposition ist an der Schutzhaube 24 ein Griffelement 28 befestigt, mit dem die erforderlichen Kräfte aufgebracht werden können, um die Schutzhaube 24 um die Schwenkachse 27 zu schwenken.

Zur Bedienung der Trennschleifmaschine 10 ist ein erster Handgriff **31** vorgesehen, der eine Bedienungseinrichtung **32** aufweist und als Top-Handle ausgebildet ist. Als Top-Handle wird ein Handgriff bezeichnet, der oberhalb des Motorgehäuses 16 angeordnet ist. Alternativ kann der erste Handgriff als Rear-Handle, der auf der der Trennschleifscheibe 11 abgewandten Seite des Motorgehäuses 16 angeordnet ist, ausgebildet sein. Zur Führung der Trennschleifmaschine 10 ist neben dem ersten Handgriff 31 ein zweiter Handgriff **33** vorgesehen, der zwischen der Trennschleifscheibe 11 und dem ersten Handgriff 31 angeordnet ist. Der zweite Handgriff 33 ist in dem in FIGN. 1A, B gezeigten Ausführungsbeispiel als separates Griffrohr ausgebildet oder kann alternativ einteilig mit dem Motorgehäuse 16 oder einem anderen Gehäuseteil ausgebildet sein.

**FIGN. 2A****, B** zeigen die Schutzhaube 24 und den Riemenantrieb 19 der Trennschleifmaschine 10 der FIGN. 1A, B in einer vergrößerten Darstellung. Der Riemenantrieb 19 ist in einem Tragarmgehäuse **35** angeordnet, das ein feststehendes tragendes Gehäuseteil **36** und die Abdeckung 15 umfasst. FIG. 2A zeigt den Riemenantrieb 19 mit montierter Abdeckung 15 und FIG. 2B den Riemenantrieb 19 ohne Abdeckung 15.

Der Antrieb der Trennschleifscheibe 11 erfolgt über den Antriebsmotor 17, den Riemenantrieb 19 und die Abtriebswelle 20. Der Antriebsmotor 17 kann als Verbrennungsmotor oder als Elektromotor ausgebildet sein. Der Antriebsmotor 17 treibt die Antriebswelle 21 und die Antriebsscheibe 23 um die Antriebsachse 22 an. Ein als Antriebsriemen ausgebildetes Übertragungselement **38** ist über die Antriebsscheibe 23 und eine auf der Abtriebswelle 20 gelagerte Abtriebsscheibe **39** geführt. Die Abtriebswelle 20 ist um eine Abtriebsachse **40** drehbar, die mit der Drehachse 14 der Trennschleifscheibe 11 zusammen fällt. Die Antriebsscheibe 23, der Antriebsriemen 38 und die Abtriebsscheibe 39 bilden den Riemenantrieb 19. Die Übertragungseinrichtung 19 kann alternativ beispielsweise in Form eines Kettenantriebes ausgebildet sein, bei dem das Übertragungselement zwischen der Antriebsscheibe 23 und der Abtriebsscheibe 39 als Kette ausgebildet ist. Die Trennschleifscheibe 11 wird mittels eines Flansches **41** auf der Abtriebswelle 20 angeordnet und drehfest mit der Abtriebswelle 20 verbunden. Der Flansch 41 und die Trennschleifscheibe 11 werden auf der Abtriebswelle 20 montiert und die Trennschleifscheibe 11 wird zwischen zwei Flanschhälften des Flansches 41 angeordnet.

Die Bearbeitung eines Werkstückes mit der Trennschleifmaschine 10 erfolgt in dem Bereich der Trennschleifscheibe 11, der im Bearbeitungsbereich 26 der Schutzhaube 24 liegt. Die Schutzhaube 24 weist im Nabenbereich der Trennschleifscheibe 11 einen Befestigungsflansch **42** auf, der im Ausführungsbeispiel einteilig mit einer Seitenwand **43** der Schutzhaube 24 ausgebildet ist; alternativ kann der Befestigungsflansch als separates Teil ausgebildeten sein und mit der Schutzhaube 24 verbunden werden. Der Befestigungsflansch 42 ist auf eine passende Gegenkontur **44** des feststehenden Gehäuseteils 36 aufgesteckt und zur Gegenkontur 44 des Gehäuseteils 36 verstellbar ausgebildet.

Für Trennschleifmaschinen mit einem Verbrennungsmotor definieren die Europäische Norm EN ISO 19432:2012, die US-Norm ANSI B175.4-2013 und entsprechende Normen in anderen Ländern für den Flansch 41 in Abhängigkeit vom Typ der Trennschleifscheibe 11 (Diamant-Trennschleifscheibe oder abrasive Trennschleifscheibe) und vom Scheibendurchmesser D der Trennschleifscheibe 11 (D ≤ 250 mm, 250 mm < D ≤ 300 mm, 300 mm < D ≤ 350 mm und 350 mm < D) einen Mindestflanschdurchmesser **dₘᵢₙ.** Der Mindestflanschdurchmesser dₘᵢₙ beträgt für Diamant-Trennschleifscheiben: dₘᵢₙ = 37.5 mm für D ≤ 250 mm, dₘᵢₙ = 45 mm für 250 mm < D ≤ 300 mm, dₘᵢₙ = 52.5 mm für 300 mm < D ≤ 350 mm und dₘᵢₙ = 60 mm für 350 mm < D. Der Mindestflanschdurchmesser dₘᵢₙ beträgt für abrasive Trennschleifscheiben: dₘᵢₙ = 63.5 mm für D ≤ 250 mm, dₘᵢₙ = 75 mm für 250 mm < D ≤ 300 mm, dₘᵢₙ = 87.5 mm für 300 mm < D ≤ 350 mm und dₘᵢₙ = 100 mm für 350 mm < D.

Die maximale Schnitttiefe **tₘₐₓ,** die die Trennschleifscheibe 11 in einem Werkstück erzielen kann, wird dann erzielt, wenn der Flanschdurchmesser d_{f} des Flansches 41 dem Mindestflanschdurchmesser dₘᵢₙ entspricht und keine Komponenten der Trennschleifmaschine 10 die Schnitttiefe zusätzlich begrenzen. Dabei ist die maximale Schnittschnitte tₘₐₓ durch die halbe Differenz aus dem Scheibendurchmesser D der Trennschleifscheibe 11 und dem Mindestflanschdurchmesser dₘᵢₙ des Flansches 41 definiert: tₘₐₓ = ½ * (D - dₘᵢₙ). Die maximale Schnitttiefe tₘₐₓ beträgt bei Trennschleifmaschinen 10 mit Verbrennungsmotor und einer Diamant-Trennschleifscheibe: tₘₐₓ = 106.25 mm für D = 250 mm, tₘₐₓ = 127.5 mm für D = 300 mm, tₘₐₓ = 148.75 mm für D = 350 mm und tₘₐₓ = 170 mm für D = 400 mm. Die maximale Schnitttiefe tₘₐₓ beträgt bei Trennschleifmaschinen mit Verbrennungsmotor und einer abrasiven Trennschleifscheibe: tₘₐₓ = 93.25 mm für D = 250 mm, tₘₐₓ = 112.5 mm für D = 300 mm, tₘₐₓ = 131.25 mm für D = 350 mm und tₘₐₓ = 150 mm für D = 400 mm.

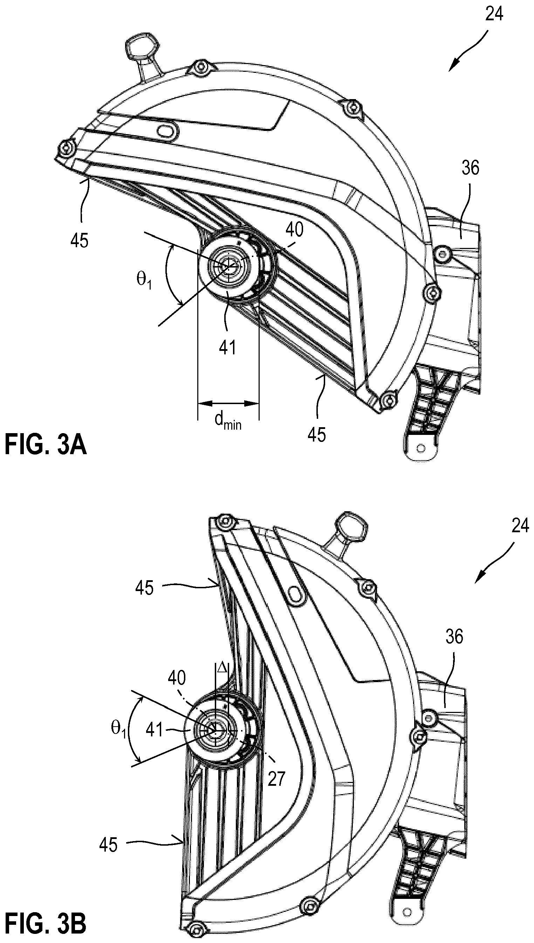

**FIGN. 3A****, B** zeigen den Flansch 41 und die Schutzhaube 24 in einer vorderen Schwenkposition (FIG. 3A) und einer hinteren Schwenkposition (FIG. 3B). Die Schutzhaube 24 ist um die Schwenkachse 27 zwischen der vorderen Schwenkposition und der hinteren Schwenkposition schwenkbar ausgebildet; der Schwenkbereich der Schutzhaube 24 ist im Ausführungsbeispiel auf einen Winkelbereich von ca. 60 ° begrenzt. Die Schutzhaube 24 kann wie im Ausführungsbeispiel in jeder beliebigen Schwenkposition zwischen der vorderen und hinteren Schwenkposition angeordnet werden; alternativ können diskrete Schwenkpositionen zwischen der vorderen und hinteren Schwenkposition für die Schutzhaube 24 vorgesehen sein.

Die Schwenkachse 27 der Schutzhaube 24 ist von der Abtriebsachse 40 der Abtriebswelle 20 verschieden. Dabei ist die Schwenkachse 27 gegenüber der Abtriebsachse 40 um einen Abstand Δ in den Abdeckbereich 25 der Schutzhaube 24 verschoben. Der Vollwinkel der Trennschleifscheibe 11 von 360 ° wird durch die Schutzhaube 24 in einen Abdeckwinkel und einen Bearbeitungswinkel unterteilt. Dabei bestimmt der Abdeckbereich 25 der Schutzhaube 24 den Abdeckwinkel und der Bearbeitungsbereich 26 der Schutzhaube 24 den Bearbeitungswinkel. Im Ausführungsbeispiel beträgt der Abdeckwinkel ca. 200 ° und der Bearbeitungswinkel ca. 160 °.

Die Schutzhaube 24 weist eine erste Außenkontur **45** auf. Als erster Winkelbereich θ₁, wird der Winkelbereich definiert, in dem die erste Außenkontur 45 der Schutzhaube 24 Abstände zur Abtriebsachse 40 aufweist, die kleiner oder gleich dem halben Mindestflanschdurchmesser dₘᵢₙ sind. Der maximale Abstand, den die erste Außenkontur 45 im ersten Winkelbereich θ₁, aufweist, wird als erster Maximalabstand **b₁** definiert. Dabei entspricht der erste Maximalabstand b₁ dem halben Mindestflanschdurchmesser dₘᵢₙ. Die Lage und die Größe des ersten Winkelbereichs θ₁, verändert sich beim Schwenken der Schutzhaube 24 um die Schwenkachse 27. FIG. 3A zeigt den ersten Winkelbereich θ₁, in der vorderen Schwenkposition der Schutzhaube 24 und FIG. 3B zeigt den ersten Winkelbereich θ₁, in der hinteren Schwenkposition der Schutzhaube 24.

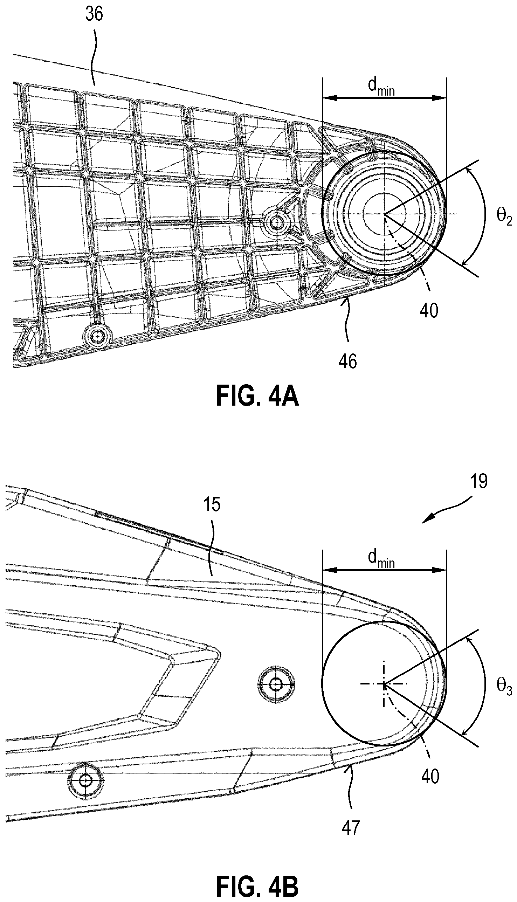

**FIGN. 4A****, B** zeigen das tragende Gehäuseteil 36 (FIG. 4A) und die Übertragungseinrichtung 19 (FIG. 4B) im Bereich der Abtriebswelle 20. Um mit der Trennschleifscheibe 11 die maximale Schnitttiefe tₘₐₓ erzielen zu können, müssen neben der Schutzhaube 24 das tragende Gehäuseteil 36 und die Übertragungseinrichtung 19 so gestaltet sein, dass ihre Außenkonturen gegenüber dem Flansch 41 nicht vorstehen.

Das tragende Gehäuseteil 36 weist eine zweite Außenkontur **46** auf. Als zweiter Winkelbereich θ₂ ist der Winkelbereich definiert, in dem die zweite Außenkontur 46 des tragenden Gehäuseteils 36 Abstände zur Abtriebsachse 40 aufweist, die kleiner oder gleich dem halben Mindestflanschdurchmesser dₘᵢₙ sind. Der maximale Abstand, den die zweite Außenkontur 46 im zweiten Winkelbereich θ₂ aufweist, wird als zweiter Maximalabstand **b₂** definiert. Dabei entspricht der zweite Maximalabstand b₂ dem halben Mindestflanschdurchmesser dₘᵢₙ.

Die Übertragungseinrichtung 19 umfasst die Abtriebsscheibe 39, die auf der Abtriebswelle 20 angeordnet ist, das Übertragungselement 38, das eine Bewegung des Antriebsmotors 17 auf die Abtriebsscheibe 39 überträgt, und die Abdeckung 15, die die Abtriebsscheibe 39 und das Übertragungselement 38 abdeckt. Die Abtriebsscheibe 39 und das Übertragungselement 38 sind rotierende Bauteile, die aus Sicherheitsanforderungen mittels der Abdeckung 15 abgedeckt werden müssen. Daher wird die Außenkontur der Übertragungseinrichtung 19 durch die Abdeckung 15 bestimmt. Die Übertragungseinrichtung 19 weist eine dritte Außenkontur **47** auf. Als dritter Winkelbereich θ₃ ist der Winkelbereich definiert, in dem die dritte Außenkontur 47 der Übertragungseinrichtung 19 Abstände zur Abtriebsachse 40 aufweist, die kleiner oder gleich dem halben Mindestflanschdurchmesser dₘᵢₙ sind. Der maximale Abstand, den die dritte Außenkontur 47 im dritten Winkelbereich θ₃ aufweist, wird als dritter Maximalabstand **bₛ** definiert. Dabei entspricht der dritte Maximalabstand b₃ dem halben Mindestflanschdurchmesser dₘᵢₙ.

Wenn die Übertragungseinrichtung 19 keine rotierenden Bauteile aufweist, kann die Abdeckung 15 entfallen oder andersartig ausgestaltet sein. Grundsätzlich muss die Bedingung, dass der Maximalabstand der Übertragungseinrichtung 19 zur Abtriebsachse 40 im dritten Winkelbereich θ₃ kleiner oder gleich dem halben Mindestflanschdurchmesser ist, für jede Teilkomponente der Übertragungseinrichtung 19 erfüllt sein. Dazu gehören die Abtriebsscheibe 39, die auf der Abtriebswelle 20 angeordnet ist, und das Übertragungselement 38, das auf der Abtriebsscheibe 39 angeordnet ist. Die Abtriebsscheibe 39 weist einen vierten Maximalabstand **b₄** auf, das Übertragungselement 38 weist einen fünften Maximalabstand bs auf und die Abdeckung 15 weist einen sechsten Maximalabstand **b₆** auf. Im Ausführungsbeispiel entspricht der sechste Maximalabstand be der Abdeckung 15 dem dritten Maximalabstand **b₃** der Übertragungseinrichtung 19, da die dritte Außenkontur 47 der Übertragungseinrichtung 19 durch die Abdeckung 15 bestimmt ist.

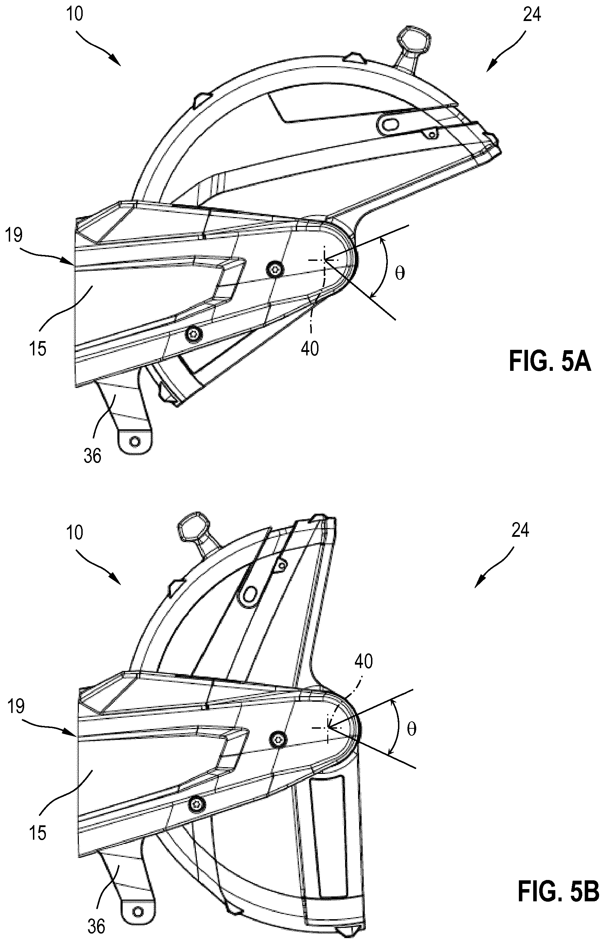

**FIGN. 5A****, B** zeigen die erfindungsgemäße Trennschleifmaschine 10 mit der Schutzhaube 24, dem tragenden Gehäuseteil 36 und der Übertragungseinrichtung 19 in der vorderen Schwenkposition der Schutzhaube 24 (FIG. 5A) und in der hinteren Schwenkposition der Schutzhaube 24 (FIG. 5B).

Die Schutzhaube 24 steht im ersten Winkelbereich θ₁, gegenüber dem Flansch 41 nicht vor, das tragende Gehäuseteil 36 steht im zweiten Winkelbereich θ₂ gegenüber dem Flansch 41 nicht vor und die Übertragungseinrichtung 19 steht im dritten Winkelbereich θ₃ gegenüber dem Flansch 41 nicht vor. Die Schnittmenge aus dem ersten Winkelbereich θ₁, dem zweiten Winkelbereich θ₂ und dem dritten Winkelbereich θ₃ wird als Outcut-Winkel θ definiert. Im Outcut-Winkel θ gilt, dass die Schutzhaube 24, das tragende Gehäuseteil 36 und die Übertragungseinrichtung 19 Abstände zur Abtriebsachse 40 aufweisen, die kleiner oder gleich dem halben Mindestflanschdurchmesser dₘᵢₙ sind. Wenn der Arbeitswinkel der erfindungsgemäßen Trennschleifmaschine 10 innerhalb des Outcut-Winkels θ liegt, kann die maximale Schnitttiefe tₘₐₓ, die als halbe Differenz aus dem Scheibendurchmesser D der Trennschleifscheibe 11 und dem Mindestflanschdurchmesser dₘᵢₙ definiert ist, erzielt werden.

Da die Schutzhaube 24 um die Schwenkachse 27 schwenkbar ist, verändert sich die Lage des ersten Winkelbereichs θ₁, relativ zum zweiten Winkelbereich θ₂ des tragenden Gehäuseteils 36 und zum dritten Winkelbereich θ₃ der Übertragungseinrichtung 19. FIG. 5A zeigt den Outcut-Winkel θ in der vorderen Schwenkposition der Schutzhaube 24 und FIG. 5B zeigt den Outcut-Winkel θ in der hinteren Schwenkposition der Schutzhaube 24. Im Ausführungsbeispiel beträgt der Outcut-Winkel θ in der vorderen Schwenkposition ca. 62 ° und in der hinteren Schwenkposition ca. 55 °. Der Outcut-Winkel θ ist in allen Schwenkpositionen der Schutzhaube 24 zwischen der vorderen und hinteren Schwenkposition von Null verschieden. Da der Outcut-Winkel θ für alle Schwenkpositionen der Schutzhaube 24 von Null verschieden ist, kann in jeder Schwenkposition der Schutzhaube 24 die maximale Schnitttiefe tₘₐₓ erzielt werden. Die Trennschleifmaschine 10 muss vom Bediener lediglich so ausgerichtet werden, dass der Arbeitswinkel innerhalb des Outcut-Winkels θ liegt.

## Patentansprüche

1. Tragbare, handgeführte Trennschleifmaschine (10), aufweisend:
▪ ein tragendes Gehäuseteil (36),
▪ eine Trennschleifscheibe (11) mit einem Scheibendurchmesser (D),
▪ eine Abtriebswelle (20), die am Gehäuseteil (36) mittels eines Lagerelementes (45) um eine Abtriebsachse (40) drehbar gelagert ist,
▪ einen Antriebsmotor (17) und eine Übertragungseinrichtung (19), die den Antriebsmotor (17) mit der Abtriebswelle (20) verbindet, wobei die Übertragungseinrichtung (19) am Gehäuseteil (36) angeordnet ist,
▪ einen Flansch (41) mit einem Flanschdurchmesser (d_{f}), wobei die Trennschleifscheibe (11) mittels des Flansches (41) drehfest auf der Abtriebswelle (20) anordbar ist, und
▪ eine Schutzhaube (24) mit einem Abdeckbereich (25), der die Trennschleifscheibe (11) zumindest teilweise abdeckt, und einem Bearbeitungsbereich (26), der die Trennschleifscheibe (11) freigibt, wobei die Schutzhaube (24) am Gehäuseteil (36) um eine Schwenkachse (27) schwenkbar gelagert ist,
**dadurch gekennzeichnet, dass** der Flanschdurchmesser (d_{f}) des Flansches (41) einem Mindestflanschdurchmesser (dₘᵢₙ) entspricht und die Schutzhaube (24) über einen ersten Winkelbereich (θ₁), das tragende Gehäuseteil (36) über einen zweiten Winkelbereich (θ₂) und die Übertragungseinrichtung (19) über einen dritten Winkelbereich (θ₃) Maximalabstände (b₁, b₂, b₃) zur Abtriebsachse (40) aufweisen, die kleiner oder gleich dem halben Mindestflanschdurchmesser (dₘᵢₙ) sind.

2. Trennschleifmaschine nach Anspruch 1, **dadurch gekennzeichnet, dass** die Schutzhaube (24) zwischen einer vorderen und einer hinteren Schwenkposition verstellbar ist, wobei ein Outcut-Winkel (θ), der als Schnittmenge aus dem ersten, zweiten und dritten Winkelbereich (θ₁, θ₂, θ₃) gebildet ist, für mindestens eine Schwenkposition der Schutzhaube (24) von Null verschieden ist.

3. Trennschleifmaschine nach Anspruch 2, **dadurch gekennzeichnet, dass** der Outcut-Winkel (θ) für alle Schwenkpositionen der Schutzhaube (24) zwischen der vorderen und hinteren Schwenkposition von Null verschieden ist.

4. Trennschleifmaschine nach Anspruch 1, **dadurch gekennzeichnet, dass** die Schwenkachse (27) der Schutzhaube (24) gegenüber der Abtriebsachse (40) der Abtriebswelle (20) um einen Abstand (Δ) in den Abdeckbereich (25) der Schutzhaube (24) verschoben ist.

5. Trennschleifmaschine nach Anspruch 4, **dadurch gekennzeichnet, dass** die Größe des ersten Winkelbereiches (θ₁) von der Schwenkposition der Schutzhaube (24) abhängig ist.

6. Trennschleifmaschine nach Anspruch 1, **dadurch gekennzeichnet, dass** die Übertragungseinrichtung (19) eine Abtriebsscheibe (39), die auf der Abtriebswelle (20) angeordnet ist, und ein Übertragungselement (38), das eine Bewegung des Antriebsmotors (17) auf die Abtriebsscheibe (39) überträgt, aufweist, wobei die Abtriebsscheibe (39) und das Übertragungselement (38) über den dritten Winkelbereich (θ₃) Maximalabstände (b₄, b₅) zur Abtriebsachse (40) aufweisen, die kleiner oder gleich dem halben Mindestflanschdurchmesser (dₘᵢₙ) sind.

7. Trennschleifmaschine nach Anspruch 6, **dadurch gekennzeichnet, dass** die Übertragungseinrichtung (19) eine Abdeckung (15) aufweist, die die Abtriebsscheibe (39) und das Übertragungselement (38) abdeckt, wobei die Abdeckung (15) über den dritten Winkelbereich (θ₃) einen Maximalabstand (b₆) zur Abtriebsachse (40) aufweist, der kleiner oder gleich dem halben Mindestflanschdurchmesser (dₘᵢₙ) ist.

8. Trennschleifmaschine nach Anspruch 1, **dadurch gekennzeichnet, dass** der Antriebsmotor (17) als Verbrennungsmotor ausgebildet ist und die Trennschleifscheibe (11) als Diamant-Trennschleifscheibe oder als abrasive Trennschleifscheibe ausgebildet ist.

9. Trennschleifmaschine nach Anspruch 1, **dadurch gekennzeichnet, dass** der Antriebsmotor (17) als Elektromotor ausgebildet ist und die Trennschleifscheibe (11) als Diamant-Trennschleifscheibe oder als gebundene verstärkte Trennschleifscheibe ausgebildet ist.

## Claims

1. Portable, hand-held cut-off grinding machine (10) having:
▪ a supporting housing part (36),
▪ a cut-off grinding disc (11) with a disc diameter (D),
▪ an output shaft (20) which is mounted on the housing part (36) by means of a bearing element (45) so as to be rotatable about an output axis (40),
▪ a drive motor (17) and a transmission device (19) which connects the drive motor (17) to the output shaft (20), wherein the transmission device (19) is arranged on the housing part (36),
▪ a flange (41) with a flange diameter (d_{f}), wherein the cut-off grinding disc (11) is able to be arranged in a rotationally conjoint manner on the output shaft (20) by means of the flange (41), and
▪ a protective hood (24) with a covering region (25), which at least partially covers the cut-off grinding disc (11), and with a machining region (26), which exposes the cut-off grinding disc (11), wherein the protective hood (24) is mounted on the housing part (36) so as to be pivotable about a pivot axis (27),
**characterized in that** the flange diameter (d_{f}) of the flange (41) corresponds to a minimum flange diameter (dₘᵢₙ), and the protective hood (24), over a first angle range (θ₁), the supporting housing part (36), over a second angle range (θ₂), and the transmission device (19), over a third angle range (θ₃), have maximum distances (b₁, b₂, b₃) from the output axis (40) which are less than or equal to half the minimum flange diameter (dₘᵢₙ).

2. Cut-off grinding machine (10) according to Claim 1, **characterized in that** the protective hood (24) is adjustable between a front and a rear pivoting position, wherein an outcut angle (θ), which is formed as the intersection of the first, second and third angle ranges (θ₁, θ₂, θ₃), is non-zero for at least one pivoting position of the protective hood (24).

3. Cut-off grinding machine (10) according to Claim 2, **characterized in that** the outcut angle (θ) is non-zero for all pivoting positions of the protective hood (24) between the front and rear pivoting positions.

4. Cut-off grinding machine (10) according to Claim 1, **characterized in that** the pivot axis (27) of the protective hood (24) is displaced by a distance (Δ) into the covering region (25) of the protective hood (24) in relation to the output axis (40) of the output shaft (20).

5. Cut-off grinding machine (10) according to Claim 4, **characterized in that** the size of the first angle range (θ₁) is dependent on the pivoting position of the protective hood (24).

6. Cut-off grinding machine (10) according to Claim 1, **characterized in that** the transmission device (19) has an output disc (39), which is arranged on the output shaft (20), and a transmission element (38), which transmits a movement of the drive motor (17) to the output disc (39), wherein the output disc (39) and the transmission element (38), over the third angle range (θ₃), have maximum distances (b₄, bs) from the output axis (40) which are less than or equal to half the minimum flange diameter (dₘᵢₙ).

7. Cut-off grinding machine (10) according to Claim 6, **characterized in that** the transmission device (19) has a cover (15) which covers the output disc (39) and the transmission element (38), wherein the cover (15), over the third angle range (θ₃), has a maximum distance (b₆) from the output axis (40) which is less than or equal to half the minimum flange diameter (dₘᵢₙ).

8. Cut-off grinding machine (10) according to Claim 1, **characterized in that** the drive motor (17) is designed as a combustion engine, and the cut-off grinding disc (11) is designed as a diamond cut-off grinding disc or as an abrasive cut-off grinding disc.

9. Cut-off grinding machine (10) according to Claim 1, **characterized in that** the drive motor (17) is designed as an electric motor, and the cut-off grinding disc (11) is designed as a diamond cut-off grinding disc or as a bonded, reinforced cut-off grinding disc.

## Revendications

1. Tronçonneuse à disque à main portative (10), comprenant :
▪ une partie de boîtier porteuse (36),
▪ un disque de tronçonnage (11) ayant un diamètre de disque (D),
▪ un arbre de sortie (20) qui est monté sur la partie de boîtier (36) de manière rotative sur un axe de sortie (40) au moyen d'un élément de palier (45),
▪ un moteur d'entraînement (17) et un dispositif de transmission (19) qui relie le moteur d'entraînement (17) à l'arbre de sortie (20), le dispositif de transmission (19) étant disposé sur la partie de boîtier (36),
▪ une bride (41) ayant un diamètre de bride (d_{f}), le disque de tronçonnage (11) étant disposé solidairement en rotation sur l'arbre de sortie (20) au moyen de la bride (41), et
▪ un capot de protection (24) comprenant une zone de recouvrement (25) qui recouvre au moins partiellement le disque de tronçonnage (11) et une zone de traitement (26) qui expose le disque de tronçonnage (11), le capot de protection (24) étant monté sur la partie de boîtier (36) de manière pivotante sur un axe de pivotement (27),
**caractérisée en ce que** le diamètre de bride (d_{f}) de la bride (41) correspond à un diamètre de bride minimal (dₘᵢₙ) et le capot de protection (24) sur une première plage angulaire (θ₁), la partie de boîtier porteuse (36) sur une deuxième plage angulaire (θ₂) et le dispositif de transmission (19) sur une troisième plage angulaire (θ₃) étant à des distances maximales (b₁, b₂, b₃) de l'axe de sortie (40) qui sont inférieures ou égales à la moitié du diamètre de bride minimal (dₘᵢₙ).

2. Tronçonneuse à disque selon la revendication 1, **caractérisée en ce que** le capot de protection (24) est réglable entre une position de pivotement avant et une position de pivotement arrière, un angle de coupe (θ), qui est formé comme l'intersection des première, deuxième et troisième plages angulaires (θ₁, θ₂, θ₃), étant différent de zéro pour au moins une position de pivotement du capot de protection (24).

3. Tronçonneuse à disque selon la revendication 2, **caractérisée en ce que** l'angle de coupe (θ) est différent de zéro pour toutes les positions de pivotement du capot de protection (24) entre la position de pivotement avant et la position de pivotement arrière.

4. Tronçonneuse à disque selon la revendication 1, **caractérisée en ce que** l'axe de pivotement (27) du capot de protection (24) est décalé par rapport à l'axe de sortie (40) de l'arbre de sortie (20) d'une distance (Δ) dans le zone de recouvrement (25) du capot de protection (24).

5. Tronçonneuse à disque selon la revendication 4, **caractérisée en ce que** la dimension de la première plage angulaire (θ₁) dépend de la position de pivotement du capot de protection (24).

6. Tronçonneuse à disque selon la revendication 1, **caractérisée en ce que** le dispositif de transmission (19) comporte une poulie de sortie (39) qui est disposée sur l'arbre de sortie (20), et un élément de transmission (38) qui transmet un mouvement du moteur d'entraînement (17) à la poulie de sortie (39), la poulie de sortie (39) et l'élément de transmission (38) étant à des distances maximales (b₄, b₅) de l'axe de sortie (40) sur la troisième plage angulaire (θ₃) qui sont inférieures ou égales à la moitié du diamètre de bride minimum (dₘᵢₙ).

7. Tronçonneuse à disque selon la revendication 6, **caractérisée en ce que** le dispositif de transmission (19) présente un couvercle (15) qui recouvre la poulie de sortie (39) et l'élément de transmission (38), le couvercle (15) étant à une distance maximale (b₆) de l'axe de sortie (40) sur la troisième plage angulaire (θ₃) qui est inférieure ou égale à la moitié du diamètre de bride minimum (dₘᵢₙ).

8. Tronçonneuse à disque selon la revendication 1, **caractérisée en ce que** le moteur d'entraînement (17) est conçu comme un moteur à combustion interne et le disque de tronçonnage (11) est conçu comme un disque de tronçonnage au diamant ou comme un disque de tronçonnage abrasif.

9. Tronçonneuse à disque selon la revendication 1, **caractérisée en ce que** le moteur d'entraînement (17) est conçu comme un moteur électrique et le disque de tronçonnage (11) est conçu comme un disque de tronçonnage au diamant ou comme un disque de tronçonnage renforcé collé.
